# EUROPÄISCHE PATENTSCHRIFT

(11) **EP 0 592 758 B1**
(45) Veröffentlichungstag und Bekanntmachung des Hinweises auf die Patenterteilung: **13.01.1999**
(21) Anmeldenummer: 93101662.0
(22) Anmeldetag: 03.02.1993
(51) Int. Cl.: B32B 29/08, B32B 29/06, B65D 65/40, B65D 81/18

(54) **Verfahren zum Herstellen von Wellpappe sowie Wellpappe**
Method for the manufacture of corrugated board as well as corrugated board thus obtained
Procédé pour la fabrication de carton ondulé ainsi que du carton ondulé

(30) Priorität: 14.10.1992 DE 4234689
(43) Veröffentlichungstag der Anmeldung: 20.04.1994
(73) Patentinhaber: HANS KOLB WELLPAPPE GmbH & Co., D-87685 Memmingen (DE)
(72) Erfinder: Wolf-Henning Laves, W-8944 Grönenbach (DE)
(74) Vertreter: Grünecker, Kinkeldey, Stockmair & Schwanhäusser Anwaltssozietät

(56) Entgegenhaltungen:
- EP-A- 0 216 311
- EP-A- 0 228 710
- DE-A- 2 947 262
- DE-A- 3 214 940
- GB-A- 2 023 495
- GB-A- 2 078 609
- US-A- 4 482 048
- US-A- 4 606 790
- US-A- 4 685 563
- US-A- 4 746 574

## Beschreibung

Die Erfindung betrifft ein Verfahren gemäß dem Oberbegriff des Anspruchs 1 sowie Wellpappe gemäß dem Oberbegriff des Anspruchs 8.

Bei einem aus DE-A-32 14 940 bekannten Verfahren zum Herstellen von Werkstoff zum Verpacken elektronischer Bauelemente wird als Außenlage von Wellpappe dienendes Kraftpapier an der bedruckbaren Außenseite mit einem Netzwerk oder Gittermuster sich kreuzender Linien leitfähiger, d.h. kohlenstoffhaltiger, Druckfarbe bedruckt. Wird aus dem Werkstoff eine Schachtel gebildet, dann befindet sich das leitende Gittermuster auf sämtlichen Innenflächen und/oder Außenflächen der Schachtel. Zur Herstellung einer statische Ladungen zerstreuenden Bodenauflage wird eine obere Folienschicht mit einer leitfähig bedruckten Seite nach unten auf eine erheblich dickere Gund- oder Unterlagsschicht haftend aufgebracht, wobei beide Schichten Kunststoff-Folien sind und die Verbindung zwischen den Kunststoff-Folien durch einen Klebstoff oder durch Anwendung von Wärme und Druck erfolgt.

Bei gemäß US-A-4 685 563vollflächiger, gleichmäßiger Aufbringung der Abschirmung im Inneren einer Wellpappestruktur wird nicht nur relativ und unnötig viel teures Abschirmmaterial eingesetzt, sondern es treten wegen des kohlenstoffhaltigen Materials der Abschirmung erhebliche Probleme beim Verkleben der Lagen und bei der Haltbarkeit der Klebeverbindung auf. Die Entsorgung einer derart veredelten Wellpappe ist problematisch.

Bei einem aus US-A-4 746 574 bekannten, antistatischen Bogenmaterial ist auf einer durchgehenden Trägerfolie aus einem thermoplastischen Material eine elektrisch leitfähige bzw. rußhaltige Schicht vollflächig oder als Muster aufgebracht, die oberflächlich durch eine Harz-Deckschicht abgedeckt wird. Dabei werden in der vollflächigen, elektrisch leitfähigen Schicht mikroskopisch kleine Vorsprünge gebildet, die in die Oberflächen-Harzschicht vorstehen.

Bei einem aus EP-A-0 216 311 bekannten Verfahren zur Herstellung eines leitfähigen Behälters für elektronische Gegenstände aus Wellpappe in mehrlagigem Aufbau werden die beiden Oberflächen der Wellpappe mit einer leitfähigen, kohlenstoffhaltigen Dispersion beschichtet, und wird in die Wellpappe als Abschirmung gegen elektromagnetische und Radiofrequenzfelder eine Metallfolie eingegliedert, wobei zwischen der kohlenstoffhaltigen Oberflächenbeschichtung und der Metallfolie eine leitfähige Verbindung hergestellt wird. Die Metallfolie wird beispielsweise bei der Herstellung einer ebenen Decklage für die Wellpappe bereits zwischen die Decklage bildende ebene Deckschichtlagen eingeklebt.

Bei einem aus EP-A-0 228 710 bekannten Verfahren zum Herstellen eines Papierlaminats, das eine thermoplastische Polymerschicht aufweist, wird beispielsweise ein Rostinhibitor zum Imprägnieren einer Papierlage eingesetzt, wobei der Rostinhibitor aus der Papierlage in die thermoplastische Polymerschicht eindringt.

Bei einem aus GB-A-20 23 495 bekannten Verfahren zum Herstellen eines Laminatwerkstoffes aus zwei äußeren Papier- oder Kartonlagen und einer dazwischenliegenden Thermoplastlage, wird elektrisch leitfähiges Pulver, z.B. Ruß, verwendet, um zumindest bereichsweise den Thermoplast zu schmelzen und die Papier- oder Kartonlagen miteinander zu verbinden. Auf diese Weise läßt sich beispielsweise in einem Verpackungslaminat ein Saum bilden. Der Ruß wird mit einem die Rußpartikel aneinanderhaftenden Binder behandelt und auf die Papier- oder Kartonlage in Streifenform oder vollflächig aufgebracht, ehe die Thermoplastlage aufgelegt wird. Durch mit hoher Frequenz induktiv in den Ruß eingebrachten Stroms erhitzt sich der Ruß bis zum Aufschmelzen des Thermoplasts, der die Papier- oder Kartonlagen miteinander verbindet.

Bei einem aus US-A-4 606 790 bekannten Verfahren zum Herstellen leitfähiger Wellpappe zum Aufzehren elektrostatischer Ladungen wird partikelförmiges leitfähiges Material wie Ruß, Graphit, Metallpulver oder dgl. mit einem wasserlöslichen Polymer aufgeschlämmt und der Papier-Pulpe zugemischt, aus der in einer Papiermaschine einzelne Lagen für die Wellpappe erzeugt werden. In der Wellpappe-Struktur kann die gewellte Kernlage und/oder eine mehrschichtige ebene Decklage mit dem leitfähigen Material ausgestattet sein. Die Verarbeitung der nicht imprägnierten Lagen und der imprägnierten Lagen erfolgt in einer herkömmlichen Papier- oder Wellpappe-Herstellungsmaschine. Das elektrisch leitfähige Material ist zwischen die Fasern eingegliedert, die in den Lagen der Wellpappe vorliegen.

Bei einem aus US-A-4 482 048 bekannten schachtelförmigen Behälter aus Wellpappe ist an der in der Wellpappestruktur innenliegenden Oberfläche einer ebenen Decklage eine vollflächige Kohlenstoffschicht aufgebracht. Die gewellte Kernlage ist an die Kohlenstoffschicht geklebt. Die Kohlenstoffschicht besteht aus Kohlenstoffpartikeln, die mit einem verflüssigbaren Bindemittel imprägniert sind. Die Mischung aus Kohlenstoff und Bindemittel wird mit einem Schwamm auf die Oberfläche der Decklage aufgebracht und dann durch Erwärmen fixiert.

Bei einer aus GB-A-20 78 609 bekannten Wellpappestruktur sind in den Decklagen und in der gewellten Kernlage in Herstellungsrichtung der Wellpappe verlaufende Metalldrähte vorgesehen, die zueinander parallel und beabstandet verlaufen. Dabei werden die Lagen der Wellpappe aus mehreren Schichten und unter Verwendung von Streifenmaterial aufgebaut, um Kanäle zum Unterbringen der Drähte zu bilden.

Der Erfindung liegt die Aufgabe zugrunde, ein Verfahren der eingangs genannten Art sowie eine Wellpappe zu schaffen, bei denen für die gewünschte Abschirmwirkung ein verringerter Einsatz an Abschmirmaterial ausreicht, die im Hinblick auf eine umweltschonende Entsorgung ausgelegt sind, und mit denen ein hoher Qualitäts- und Sicherheitsstandard der Wellpappe erreichbar sind.

Die gestellte Aufgabe wird erfindungsgemäß mit den im Anspruch 1 angegebenen Verfahrensmerkmalen sowie mit den baulichen Merkmalen gemäß Anspruch 8 gelöst.

Bei dem Verfahren wird die innenliegende Oberfläche wenigstens einer Lage in der Wellpappestruktur hauptsächlich nur im Bereich der Schichtteile mit dem Abschirmmaterial versehen. Dadurch wird Abschirmmaterial eingespart (bis zu 40 %); die Entsorgung bzw. das Recycling der Wellpappe lassen sich umweltschonend durchführen. Da in den flächigen Zwischenräumen kein oder sehr wenig haftunfreundliches Abschirmmaterial mit z.B. Kohlenstoff und/oder Graphit vorliegt, lassen sich die Zwischenräume gut zum Verkleben der Lagen nutzen. Erstaunlicherweise zeigt sich, daß trotz der Zwischenräume eine ausreichende Abschirmung erzielt wird (Faraday'scher Käfig) und trotz der haftunfreundlichen innenliegenden Abschirmung eine dauerhafte und feste Haftung zwischen den Lagen gegeben ist. Da die zu schützenden Gegenstände, z.B. elektronische Komponenten oder explosive oder leicht entzündliche Substanzen, z.B. Chemikalien, durch den Halbisolator der Lage(n) von der Abschirmung und auch örtlich davon getrennt ist, sind die Gefahr der Verletzung der Abschirmung und von Überschlägen beseitigt. Die auf diese Weise hergestellte Wellpappe unterscheidet sich äußerlich nicht von konventioneller Wellpappe und kann beliebig eingefärbt oder bedruckt oder auf andere Weise veredelt werden.

Die derart hergestellte Wellpappe garantiert trotz verringerten Einsatzes von Abschirmmaterial eine gute Abschirmwirkung, ist kostengünstig herstellbar und umweltfreundlich zu entsorgen oder zu recyceln. In den Zwischenräumen ist eine feste und dauerhafte Verklebung der Lagen gegeben, ähnlich wie bei herkömmlicher Wellpappe.

Bei einer alternativen, bevorzugten Ausführungsform werden die Zwischenräume durch dünnere flächige Schichtteile abgedeckt. Die dünneren flächigen Schichtteile ergänzen die Abschirmwirkung der dickeren und miteinander verbundenen Schichtteile. Trotzdem läßt sich die Verklebung noch fest und dauerhaft haltbar vornehmen, weil der Klebstoff durch die dünneren Schichtteile hindurchdringt. Aufgrund der dünneren Schichtteile ist der Gesamteinsatz an Beschichtungsmaterial geringer als bei vollflächiger gleichmäßig dicker Aufbringung. Dies begünstigt die Entsorgung und das Recycling.

Besonders zweckmäßig ist es, die miteinander verbundenenSchichtteile aufzudrucken und zu verdichten. In mehreren Druckgängen, z.B. vier bis sechs Druckgängen wird so ein kräftiges und solides Muster an miteinander verbundenen Schichtteilen gebildet. Dank der Verdichtung wird die Gesamtdicke der Wellpappe nicht erhöht.

Besonders zweckmäßig ist es, die dünneren Schichtteile durch vollflächiges Bedrucken, Besprühen oder Bestreichen aufzubringen, und zwar ehe und/oder nachdem die miteinander verbundenen Schichtteile aufgebracht sind. Im Hinblick auf einen geringen Einsatz an Beschichtungsmaterial reicht für die dünneren Schichtteile ein Druckdurchgang aus; aus Sicherheitsgründen können auch zwei Druckdurchgänge vollzogen werden. Die Abschirmung stellt sich danach als zusammenhängende Schicht mit erhabenen und zurücktretenden Schichtteilen dar. Gegebenenfalls sind die zusammenhängenden Schichtteile dank der Verdichtung in etwa gleich hoch wie die dünneren Schichtteile. Trotzdem kann der Klebstoff die dünneren Schichtteile zum Verkleben durchdringen.

Bei einer alternativen Verfahrensform wird die Abschirmung als Bahn, Gitter oder Netz vorgefertigt und beim Verkleben der Lagen miteingebunden. Dies ist verfahrenstechnisch günstig, weil die Bahn, das Gitter oder das Netz an anderer Stelle vorgefertigt und nur mehr in eine Wellpappe-Maschine eingeführt zu werden braucht.

Diese Bahn kann zweckmäßigerweise auch miteinander verbundene, kräftige Schichtteile und dazwischenliegende, die Zwischenräume ausfüllende dünnere Schichtteile aufweisen, wobei die Verklebung der Lagen durch die dünneren Schichtteile hindurch stattfindet.

Bei einer weiteren, wichtigen Verfahrensvariante wird zusätzlich zu wenigstens einer innenliegenden Abschirmung auf eine außenliegende Oberfläche wenigstens einer Lage vollflächig ableitender Lack aufgebracht. Dieser sorgt für die Ableitung elektrostatischer Ladungen, wodurch die Abschirmwirkung der Abschirmung unterstützt und verbessert wird. Zwischen dem ableitenden Lack und der Abschirmung ist Papier- oder Pappematerial als Halbisolator wirksam, was die Schutzwirkung der Wellpappe verbessert.

In der Wellpappestruktur, in der die Zwischenräume zwischen den miteinander verbundenen Schichtteilen durch dünnere flächige Schichtteile abgedeckt sind, sind die die Abschirmung zwischen sich einschließenden Lagen im Bereich der dünneren Schichtteile dauerhaft haltbar und fest miteinander verklebt. Die dünneren Schichtteile erhöhen zwar die Abschirmwirkung des Faraday'schen Käfigs jedoch behindern sie die Klebeverbindung nicht bzw. nicht wie die dickeren, miteinander verbundenen Schichtteile.

Zweckmäßigerweise ist die Dicke und/oder Dichte der dünneren Schichtteile so eingestellt, daß der die Lagen verklebende Klebstoff durchdringt und seine Haftwirkung zuverlässig ausübt.

Wenn die Zwischenräume ein in etwa regelmäßiges Muster mit einer zur Richtung von Wellenkämmen einer gewellten Lage der Wellpappestruktur senkrecht oder schräg verlaufenden Musterorientierung bilden, dann entstehen optimal viele und regelmäßig verteilte Verklebestellen zwischen den Lagen.

Die Abschirmung kann als vorgefertigte Bahn mit den miteinander verbundenen Schichtteilen und den freien Zwischenräumen oder den die Zwischenräume ausfüllenden dünneren Schichtteilen in die Wellpappe einkaschiert sein, ohne die Haftung zwischen den verklebten Lagen zu beeinträchtigen. Zweckmäßigerweise wird dazu eine Trägerbahn eingebracht, auf die zuvor die Abschirmung aufgebracht worden ist.

Eine hervorragende Abschirmwirkung mit hoher Sicherheit gegen Beschädigung der Abschirmung und mit der Sicherheit, elektrostatische Ladungen rasch abzuleiten, wird erreicht, wenn zusätzlich vollflächig ableitender Lack außen auf der Wellpappestruktur vorgesehen ist.

Zweckmäßig ist es schließlich, auf, in oder unter dem ableitenden Lack einen sublimierbaren Korrosionsinhibitor vorzusehen (zuvor aufgebracht oder dem ableitenden Lack beigemischt). Der Kotrosionsinhibitor verdampft über lange Zeit und sorgt so zusätzlich für einen Korrosionsschutz metallischer Oberflächen der zu schützenden Komponenten. Der Korrosionsinhibitor nutzt die Wellpappestruktur als Depot, aus dem er wegen des ableitenden Lacks langsam verdampft. Er enthält zweckmäßigerweise polare, organische Salze, von denen freiwerdende Dämpfe an Metalloberflächen zu monomolekularen Filmen kondensieren, die zur Korrosion führende elektrochemische Prozesse passivieren.

Der Flächenwiderstand der Abschirmung in der Wellpappestruktur ist zweckmäßigerweise kleiner 10⁴ Ohm/Fläche, vorzugsweise kleiner 10¹ Ohm/Fläche. Der Flächenwiderstand der mit dem ableitenden Lack versehenen Außenoberfläche der Wellpappestruktur liegt zwischen 10⁵ und 10¹² Ohm/Fläche. Gemäß Norm CECC 00 0015/l, 1991, ist die Abschirmung somit elektrostatisch abschirmend, während die ableitende Beschichtung elektrostatisch ableitend ist.

Anhand der Zeichnung werden Ausführungsformen des Erfindungsgegenstandes erläutert. In den Zeichnungen sind die Abschirmung und die ableitende Beschichtung übertrieben stark dargestellt. Tatsächlich sind sie dünner und zum Teil in die Lagen der Wellpappestruktur eingedrungen anzusehen. Es zeigt:
- Fig. 1: einen Querschnitt durch eine Wellpappe, wobei alternative oder additive Detailvarianten nebeneinander angedeutet sind,
- Fig. 2: einen Querschnitt durch eine weitere Ausführungsform einer Wellpappe,
- Fig. 3: einen Querschnitt durch eine weitere Ausführungsform einer Wellpappe,
- Fig. 4: eine Draufsicht in Blickrichtung II - II von Fig. 1,
- Fig. 5a - 5e: Detailvarianten,
- Fig. 6: eine Perspektivansicht eines Faltbehälters aus Wellpappe, und
- Fig. 7: eine Perspektivansicht einer Bogenware aus Wellpappe.

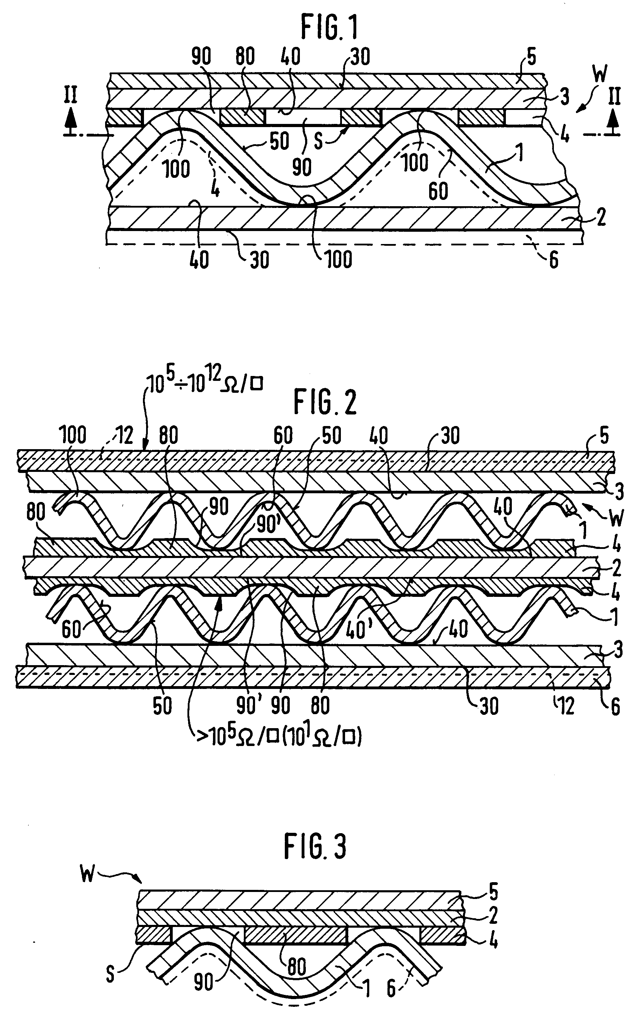

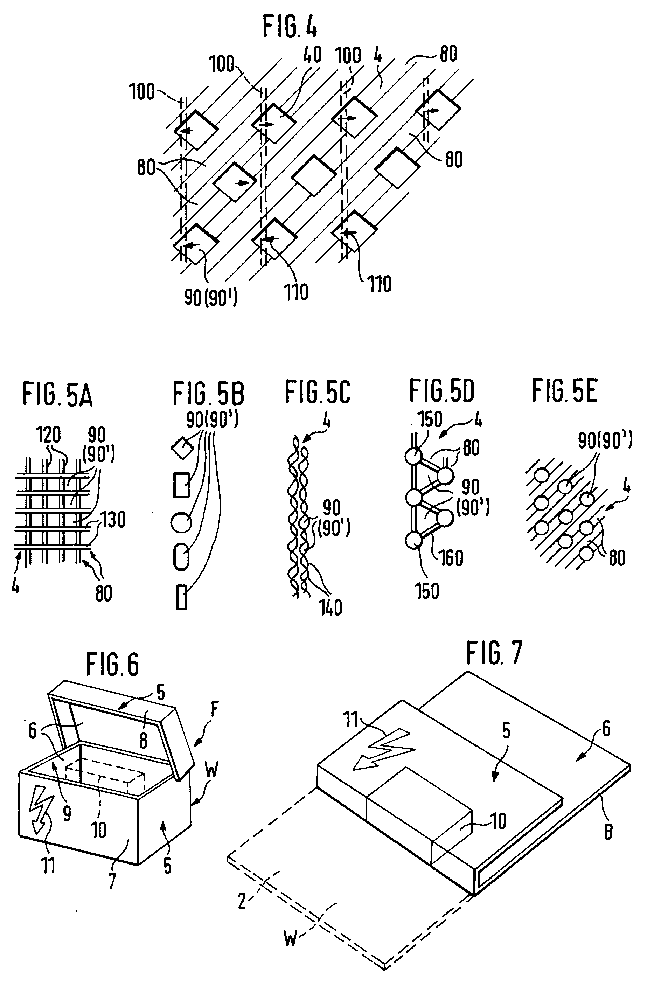

Wellpappe W gemäß den Fig. 1, 2 und 3 ist z.B. zum Herstellen von Behältern, vorzugsweise Faltbehältern F etwa der in Fig. 6 gezeigten Art, oder als Bogenware B gemäß Fig. 7 zum Verpacken von Gegenständen, z.B. elektronischen Komponenten 10, bestimmt, wobei die Gegenstände 10 gegen elektrische und/oder elektromagnetische und/oder elektrostatisch bedingte Gefahren und ggfs. gegen Korrosion zu schützen sind.

Gemäß Fig. 1 besteht die Wellpappe W aus einer gewellten Lage 1, die im Bereich ihrer Wellenkämme 100 mit ebenen Lagen 2, 3 verklebt ist. Gegebenenfalls besteht jede Lage 1, 2, 3 aus mehreren miteinander verbundenen Einzellagen aus Papier- oder Pappematerial. Die einfachste Form ist eine "offene Wellpappe" gemäß Fig. 3 mit nur einer ebenen Lage 2 und einer gewellten Lage 1. Fig. 1 repräsentiert sogenannte Standard-Wellpappe. Die Wellpappe W gemäß Fig. 2 weist zwei gewellte Lagen 1 mit einer dazwischenliegenden ebenen Lage 2 und zwei ebenen Lagen 3 an den Außenseiten der Wellpappestruktur auf.

In Fig. 1 sind die im Inneren der Wellpappestruktur liegenden Oberflächen der Lagen 3, 2 mit 40 bezeichnet; hingegen die außenliegenden Oberflächen mit 30. Die mit 50 bzw. 60 bezeichneten Oberflächen der gewellten Lage 1 befinden sich in Fig. 1 im Inneren der Wellpappestruktur. In Fig. 3 ist die Oberfläche 60 der gewellten Lage 1 eine außenliegende Oberfläche.

In Fig. 1 ist zwischen die Lagen 3, 1 eine Kohlenstoff und/oder Graphit enthaltende Abschirmung 4 eingebracht. Die Abschirmung 4 besteht aus miteinander verbundenen Schichtteilen 80, zwischen denen flächige Zwischenräume 90 vorliegen. Die Abschirmung 4 ist auf die Oberfläche 40 der Lage 3 aufgebracht. Die Zwischenräume 90 gehen bis zur Oberfläche 40 durch. Im Bereich der Zwischenräume 90 ist die gewellte Lage 1 mit der ebenen Lage 3 verklebt.

Die Abschirmung 4 könnte auch auf die Oberfläche 50 oder - wie strichliert angedeutet - auf die Oberfläche 60 der gewellten Lage 1 aufgebracht sein. Ferner ist es denkbar, die Abschirmung 4 auch an der Oberfläche 40 der anderen Lage 2 vorzusehen. Möglich ist es ferner, in der Wellpappestruktur gemäß Fig. 1 mehrere Abschirmungen 4 vorzusehen.

Die außenliegenden Oberflächen 30 der Lagen 2, 3 in der Wellpappe W gemäß Fig. 1 können unbehandelt sein. Zweckmäßigerweise ist aber zumindest auf einer Oberfläche 30 eine durchgehende Beschichtung 5 aus ableitendem Material, z.B. einem ableitenden Lack, aufgebracht. Der Einfachheit halber könnte auch auf der anderen Oberfläche 30 der Lage 2 eine solche ableitende Beschichtung 6, z.B. in Form eines aufgetragenen ableitenden Lackes, vorgesehen sein (strichliert angedeutet).

Die Abschirmung 4 wird in mehreren Druckdurchgängen aufgebracht, um die miteinander verbundenen Schichtteile 80 zu bilden und diese dabei zu verdichten. Zweckmäßigerweise können bis zu sechs Druckdurchgänge mit einer Kohlenstoff und/oder Graphit enthaltenden Druckfarbe oder wässrigen Emulsion durchgeführt werden, und zwar mit einem Flächengewicht von 5 g/qcm (naß) entsprechend einem Flächengewicht von 2,5 g/qm (trocken) (dies sind jedoch nur ungefähre Richtwerte).

Bei der Wellpappe W gemäß Fig. 2 ist innen in der Wellpappestruktur wenigstens eine Abschirmung 4 vorgesehen. Diese besteht aus aufgebrachten, miteinander verbundenen dickeren Schichtteilen 80, die Zwischenräume 90 begrenzen, die durch dünnere Schichtteile 90' abgedeckt sind. Der Auftrag der Abschirmung 4 erfolgt dabei so, daß die dünneren Schichtteile 90' durch vollflächiges Bedrucken in einem oder höchstens zwei Druckgängen der Oberfläche der Lage 2 vor dem Aufdrucken der miteinander verbundenen Schichtteile 80 erfolgt, oder daß zunächst die miteinander verbundenen Schichtteile 80 aufgedruckt werden und danach die dünneren Schichtteile 90 durch vollflächiges Überdrucken gebildet werden. Denkbar ist es ferner, vor und nach den Druckgängen zum Erzeugen der miteinander verbundenen Schichtteile 80 (z.B. drei bis vier Druckgängen) je einen Druckgang mit einem vollflächigen Aufdrucken der dünneren Schichtteile 90 vorzunehmen. In den dünneren Schichtteilen 90' ist zweckmäßigerweise die Auftragsdicke so eingestellt, daß die dünneren Schichtteile 90' vom Klebstoff zum Verkleben der Lagen 1, 2 durchdrungen werden können.

In der Wellpappestruktur gemäß Fig. 2 könnte die Abschirmung 4 auch an einer oder an beiden Oberflächen einer gewellten Lage 1 oder an der Oberfläche 40 einer der oder beider Lagen 3 aufgebracht sein.

Bevorzugt, jedoch nicht notwendigerweise, ist auf einer oder beiden Oberflächen 30 der Lagen 3 eine durchgängige ableitende Beschichtung 5, 6 aus ableitendem Material vorgesehen. Unter der Beschichtung 5, 6 oder auf oder in der Beschichtung 5, 6 kann ein sublimierbarer Korrosionsinhibitor 12 (strichliert angedeutet) vorgesehen sein. Bei der gezeigten Ausführungsform in Fig. 2 ist an den Oberflächen 40 und 40' der mittleren Lage 2 je eine Abschirmung 4 aufgebracht.

Bei der offenen Wellpappe W gemäß Fig. 3 ist die Abschirmung 4, bestehend aus miteinander verbundenen Schichtteilen 80 und dazwischenliegenden Zwischenräumen 90 zwischen den Lagen 2 und 1 vorgesehen. Außen ist eine ableitende Beschichtung 5 angedeutet. Diese könnte alternativ oder additiv auch auf der freien Außenseite der gewellten Lage 1 vorgesehen sein.

Die Abschirmung 4 gemäß Fig. 2 mit den miteinander verbundenen Schichtteilen 80 und den die Zwischenräume 90 ausfüllenden dünneren Schichtteilen 90' könnte auch bei den Wellpappen gemäß Fig. 1 oder Fig. 3 vorgesehen sein. Umgekehrt könnte die Abschirmung 4 von Fig. 1 mit den freien Zwischenräumen 90 auch in der Wellpappe W gemäß Fig. 2 vorgesehen sein.

Die Abschirmung 4 könnte in jedem der gezeigten Ausführungsbeispiele auch mit einer Bahn eingebracht werden, die die zusammenhängenden Schichtteile 80 und die Zwischenräume 90 bzw. die dünneren Schichtteile 90' in den Zwischenräumen 90 aufweist, gegebenenfalls unter Zuhilfenahme einer Trägerbahn (Kunststoffolie, Papier oder Textilie).

Der Gesamtflächenanteil der Zwischenräume 90 bzw. der dünneren Schichtteile 90' ist größer als der Gesamtflächenanteil der miteinander verbundenen Schichtteile 80. Die ableitende Beschichtung 5, 6 wird mit einem Flächengewicht von ca. 25 bis 30 g/qm (naß) pro Oberfläche aufgebracht. Ist ein Korrosionsinhibitor 12 vorgesehen, dann wird dieser mit einem Anteil von 5 bis 10 Gew.-% z.B. in den ableitenden Lack für die ableitende Beschichtung 5, 6 eingemischt.

Fig. 4 ist eine schematische Draufsicht in Blickrichtung II - II in Fig. 1 und entspricht einer Ansicht auf die Abschirmung 4 in Fig. 2 oder in Fig. 3. Die Zwischenräume 90 bzw. die dünneren Schichtteile 90' sind flächig und dabei musterartig relativ gleichmäßig verteilt. Die Zwischenräume 90 bzw. dünneren Schichtteile 90' sind so ausgebildet und angeordnet, daß die Wellenkämme 100 der gewellten Lage 1 zumindest bereichsweise in den Zwischenräumen entweder die Oberfläche 40 direkt berühren oder dieser nahe gegenüberstehen. Der nicht-dargestellte Klebstoff stellt eine fest haftende Verbindung zwischen den Lagen 1, 3 oder 1, 2 her. Die Klebestellen sind in Fig. 4 mit Pfeilen 110 angedeutet. Das Muster der Zwischenräume 90 bzw. der dünneren Schichtteile 90' ist zweckmäßigerweise schräg oder senkrecht zur Orientierung der Wellenkämme 100 ausgerichtet, damit sich möglichst viele und gleichmäßig verteilte Überschneidungspunkte zwischen den Wellenkämmen 100 und den Zwischenräumen 90 bzw. den dünneren Schichtteilen 90' für die Verklebung ergeben.

Die Zwischenräume 90 bzw. die flächigen dünneren Schichtteile 90' können jede beliebige Form haben. Zweckmäßigerweise sind sie rund, viereckig oder rautenförmig wie in den Fig. 4 und 5 angedeutet.

Gemäß Fig. 5a besteht die Abschirmung 4 aus netz- oder gitterartig aufgetragenen Linien, Balken, Bahnen oder Streifen 120 und 130, die einander unter einem rechten oder auch unter jedem anderen gewünschen Winkel überkreuzen und die miteinander verbundenen schichtteile 80 bilden. In den Zwischenräumen 90 liegt entweder die Oberfläche der Lage frei, auf die die Abschirmung 4 aufgebracht ist, oder liegen die dünneren Schichtteile 90' vor, die die Abschirmwirkung der zusammenhängenden Schichtteile 80 verbessern.

In Fig. 5b sind unterschiedliche geometrische Formen für die Zwischenräume 90 bzw. die flächigen dünneren Schichtteile 90' angedeutet, die eine optimal große Anzahl von Überkreuzungsstellen mit den Wellenkämmen 100 der gewellten Lage 1 gewährleisten.

Die Abschirmung 4 gemäß Fig. 5c besteht aus einander überkreuzenden Schlangenlinien 140, die die Zwischenräume 90 bzw. die dünneren Schichtteile 90' zwischen sich einschließen.

In Fig. 5d sind die miteinander verbundenen Schichtteile 80 annähernd kreisrunde Flächen 150, die durch Querverbindungen 160 untereinander verbunden sind und die Zwischenräume 90 bzw. die dünneren Schichtteile 90' umgrenzen.

Gemäß Fig. 5e sind die miteinander verbundenen Schichtteile 80 so aufgetragen, daß getrennte, annähernd kreisrunde Zwischenräume 90 oder dünnere Schichtteile 90' in der Abschirmung 4 vorliegen.

Ist die derart ausgebildete oder aufgebrachte Abschirmung 4 an wenigstens einer innen in der Wellpappestruktur liegenden Oberfläche einer Lage 1, 2, 3 aufgebracht, dann wird eine ausreichende Abschirmung mit relativ wenig Abschirmmaterial erreicht und werden dauerhaft haltbare Klebestellen zwischen den Lagen ermöglicht.

In der jeweiligen Wellpappestruktur ist wenigstens eine Abschirmung 4 mit zusammenhängenden Schichtteilen 80 vorgesehen. Falls auch eine vollflächige Beschichtung 5, 6 aus ableitendem Material vorgesehen ist, befindet sich diese an zumindest einer außenliegenden Oberfläche.

Gegebenenfalls ist auf, in oder unter der ableitenden Beschichtung ein sublimierbarer Korrosionsinhibitor 12 vorgesehen.

Ein aus Wellpappe W bestehender Faltbehälter F gemäß Fig. 6 ist eine quaderförmige Schachtel mit einem Unterteil 7 und einem Deckel 8, der über die Öffnung des Unterteils 7 stülpbar ist. Der mit 9 bezeichnete Innenraum nimmt wenigstens eine elektronische Komponente, z.B. den Gegenstand 10, geschützt auf. Die dem Innenraum 9 zugewandten und gegebenenfalls auch die äußeren Oberflächen des Faltbehälters sind mit einer ableitenden Beschichtung 5, 6 behandelt. Ferner kann ein Druckbild 11 auf oder unter der Beschichtung 5, 6 vorgesehen sein. Ist nur eine Außenseite der Wellpappe W im Faltbehälter F mit einer ableitenden Beschichtung versehen, so sollte diese an der Außenseite des Faltbehälters F liegen. Ist in der Wellpappestruktur nur eine Abschirmung 4 enthalten, so sollte diese wegen der Gefahr von Einstichen von innen her an der dem Innenraum 9 abgewandten Seite der gewellten Lage 1 liegen.

In Fig. 7 ist Bogenware B aus der Wellpappe W gemäß einer der Fig. 1 bis 3 gezeigt, die entweder zum Verpacken eines oder mehrerer Gegenstände 10 oder zum Herstellen von Zuschnitten für Faltbehälter F dient. Der Gegenstand 10 wird in die Bogenware B eingeschlagen, wobei zweckmäßigerweise beide außenliegenden Oberflächen der Bogenware B mit einer ableitenden Beschichtung 5, 6 versehen sind. Gegebenenfalls ist auch ein Druckbild 11 aufgebracht bzw. die Bogenware B an einer oder an beiden Seiten bedruckt.

## Patentansprüche

1. Verfahren zum Herstellen von Wellpappe (W) aus Pappe- oder Papiermaterial für Behälter (F) oder für Bogenware (B) zum Schutz elektrostatisch gefährdeter Gegenstände (10) gegen elektrostatische Entladungen und elektrische Felder, bei dem die Wellpappestruktur mit wenigstens einer kohlenstoffhaltigen Abschirmung (4) versehen wird, die als Schicht aus gitter- oder netztartig miteinander verbundenen Schichtteilen (80) und dazwischenliegenden, flächigen Zwischenräumen (90) aufgebracht wird, **dadurch gekennzeichnet,** daß die Schicht vor dem Verkleben der Lagen (1, 2,3) der Wellpappestruktur auf eine in der späteren Wellpappestruktur innenliegende Oberfläche (40, 50, 60) wenigstens einer Lage aufgebracht wird, und daß die in der Wellpappestruktur die Schicht zwischen sich einschließenden Lagen (1, 2, 3) im Bereich der Zwischenräume (90) miteinander verklebt werden.

2. Verfahren nach Anspruch 1, **dadurch gekennzeichnet**, daß die Zwischenräume (90) vor oder/und nach dem Aufbringen der miteinander verbundenen Schichtteile (80) durch dünnere flächige Schichtteile (90') der Abschirmung (4) abgedeckt werden, und daß die die Schicht zwischen sich einschließenden Lagen (1, 2, 3) der Wellpappestruktur im Bereich der Zwischenräume (90) durch die dünneren Schichtteile (90') hindurch miteinander verklebt werden.

3. Verfahren nach den Ansprüchen 1 und 2, **dadurch gekennzeichnet**, daß die miteinander verbundenen Schichtteile (80) in mehreren Druckgängen aufgedruckt und durch das Aufdrucken verdichtet werden.

4. Verfahren nach Anspruch 2, **dadurch gekennzeichnet**, daß die dünneren Schichtteile (90') durch vollflächiges Bedrucken, in zumindest einem Druckgang, oder Besprühen bzw. Bestreichen der innenliegenden Oberfläche (40, 50, 60) auf eine Lage aufgebracht werden, ehe und/oder nachdem die miteinander verbundenen Schichtteile (80) aufgebracht werden.

5. Verfahren nach Anspruch 1, **dadurch gekennzeichnet**, daß die die Abschirmung (4) bildende Schicht als durchgehende, die Zwischenräume (90) aufweisende Bahn oder als Gitter oder Netz vorgefertigt und beim Verkleben der Lagen (1, 2, 3) miteingebunden wird.

6. Verfahren nach den Ansprüchen 1 und 2, **dadurch gekennzeichnet**, daß die die Abschirmung (4) bildende Schicht als durchgehende, die miteinander verbundenen Schichtteile (80) und die dünneren Schichtteile (90') aufweisende Bahn vorgefertigt und beim Verkleben der Lagen (1, 2, 3) miteingebunden wird.

7. Verfahren nach den Ansprüchen 1 bis 7, **dadurch gekennzeichnet**, daß zusätzlich auf eine außenliegende Oberfläche (30, 60) wenigstens einer Lage (1, 2, 3) der Wellpappestruktur vollflächig ableitender Lack (56) aufgebracht wird.

8. Wellpappe (W) für Behälter (F) oder Bogenware (B) zum Schutz elektrostatisch gefährdeter Gegenstände (10) gegen elektrostatische Entladungen und elektrischer Felder, mit einer kohlenstoffhaltigen Schicht als Abschirmung (4) an einer Oberfläche (40, 50, 60) wenigstens einer Lage (1, 2, 3) der Wellpappestruktur, wobei die Schicht aus miteinander verbundenen Schichtteilen (60) gebildet ist, zwischen denen flächige Zwischenräume (90) gebildet sind, **dadurch gekennzeichnet**, daß die die Abschirmung (4) bildende Schicht an einer in der aus wenigstens einer gewellten Lage (1) und wenigstens einer ebenen Lage (2, 3) bestehende Wellpappestruktur innenliegenden Oberfläche wenigstens einer Lage angebracht ist, und daß die die Schicht zwischen sich einschließenden Lagen (1, 2, 3) der Wellpappestruktur im Bereich der Zwischenräume (90) miteinander verklebt sind.

9. Wellpappe nach Anspruch 8, **dadurch gekennzeichnet**, daß in der Schicht die Zwischenräume (90) zwischen den miteinander verbundenen Schichtteilen (80) durch gegenüber diesen Schichtteilen (80) dünnere, Kohlenstoff und/oder Graphit enthaltende flächige Schichtteile (90') abgedeckt sind, und daß die die Schicht einschließenden Lagen (1, 2, 3) im Bereich der dünneren flächigen Schichtteile (90') miteinander verklebt sind.

10. Wellpappe nach Anspruch 9, **dadurch gekennzeichnet**, daß die Dicke und/oder Dichte der dünneren Schichtteile (90') derart eingestellt ist, daß die dünneren Schichtteile (90') für einen die Lagen verklebenden Klebstoff durchlässig sind.

11. Wellpappe nach den Ansprüchen 8 oder 9, **dadurch gekennzeichnet**, daß die Zwischenräume (90) ein in etwa regelmäßiges Muster mit einer zur Richtung von Wellenkämmen (100) der gewellten Lage (1) der Wellpappestruktur senkrecht oder schräg verlaufenden Musterorientierung bilden.

12. Wellpappe nach wenigstens einem der Ansprüche 8 bis 11, **dadurch gekennzeichnet**, daß die Schicht eine zwischen die Lagen (1, 2, 3) einkaschierte, vorgefertigte Bahn, vorzugsweise an einer Trägerbahn aus Kunststoff, Textilie oder Papier, ist und die miteinander verbundenen Schichtteile (80) und dazwischenliegende freie Zwischenräume (90) oder die Zwischenräume (90) ausfüllende dünnere Schichtteile (90') aufweist.

13. Wellpappe nach wenigstens einem der Ansprüche 8 bis 12, **dadurch gekennzeichnet**, daß zusätzlich zur innenliegenden kohlenstoffhaltigen Schicht eine vollflächige Beschichtung (5, 6) aus ableitendem Lack auf wenigstens einer außenliegenden Oberfläche (30, 60) der Wellpappestruktur vorgesehen ist.

14. Wellpappe nach Anspruch 13, **dadurch gekennzeichnet**, daß auf, im oder unter dem ableitenden Lack ein sublimierbarer Korrosionsinhibitor (12) vorgesehen ist.

## Claims

1. A method of producing a corrugated board (W) consisting of paperboard or paper material and used for cases (F) or for sheet materials (B) for protecting electrostatically endangered articles (10) against electrostatic discharges and electric fields, wherein the corrugated board structure is provided with at least one shield means (4) which contains carbon and which is applied as a layer of layer components (80), which are interconnected as a lattice or as a net, and intermediate interspaces (90) which occupy a certain area, **characterized in** that prior to the glueing of said layers (1, 2, 3) of the corrugated board structure, the layer is applied to a surface (40, 50, 60) of at least one layer which will be located in the interior of the future corrugated board structure, and that the layers (1, 2, 3) including the layer between them in the corrugated board structure are glued together in the area of the interspaces (90).

2. A method according to claim 1, **characterized in** that, prior to or/and subsequent to the application of the interconnected layer components (80), the interspaces (90) are covered by thinner layer components (90'), which occupy a certain area, and that the layer between including layers (1, 2, 3) of the corrugated board structure is glued together through said thinner layer components (90') in the area of the interspaces (90).

3. A method according to claims 1 and 2, **characterized in** that the interconnected layer components (80) are printed on in several printing processes and that they are compacted by said printing processes.

4. A method according to claim 2, **characterized in** that the thinner layer components (90') are applied to a layer by full-area printing, carried out in at least one printing process, or by spraying on, or by spread-coating on the interior surfaces (40, 50, 60), prior to and/or subsequent to the application of the interconnected layer components (80).

5. A method according to claim 1, **characterized in** that the layer forming the shield means (4) is prefabricated as a continuous web of material including the interspaces (90), or as a lattice, or as a net, and is additionally incorporated when the layers (1, 2, 3) are glued together.

6. A method according to claims 1 and 2, **characterized in** that the layer forming the shield means (4) is prefabricated as a continuous web of material including the interconnected layer components (80) and the thinner layer components (90') and is additionally incorporated when the layers (1, 2, 3) are glued together.

7. A method according to claims 1 to 7, **characterized in** that a full-area conducting lacquer (56) is additionally applied to an exterior surface (30, 60) of at least one layer (1, 2) of the corrugated board structure.

8. A corrugated board (W) which is used for cases(F) or for sheet materials (B) for protecting electrostatically endangered articles (10) against electrostatic discharges and electric fields, comprising a carbon-containing layer as a shield means (4) on a surface (40, 50, 60) of at least one layer (1, 2, 3) of the corrugated board structure, the layer being formed of interconnected layer components (60) forming thereinbetween interspaces (90) which occupy a certain area, **characterized in** that the layer forming the shield means (4) is provided on a surface of at least one layer which is the interior one in the corrugated board structure which consists of at least one corrugated layer (1) and at least one flat layer (2, 3), and that the layers (1, 2, 4) of the corrugated board structure including the layer between them are glued together in the area of the interspaces (90).

9. A corrugated board according to claim 8,
**characterized in** that in the layer the interspaces (90) between the interconnected layer components (80) are covered by layer components (90'), which occupy a certain area and which contain carbon and/or graphite and which are thinner than said layer components (80), and that the layers (1, 2, 3) including the layer between them are glued together in the area of said thinner layer components (90') occupying a certain area.

10. A corrugated board according to claim 9,
**characterized in** that the thickness and/or the density of said thinner layer components (90') is adjusted such that said thinner layer components (90') are permeable to an adhesive by means of which the layers are glued together.

11. A corrugated board according to claims 8 or 9,
**characterized in** that the interspaces (90) define an approximately regular pattern whose orientation is perpendicular to, or oblique to the direction of wave crests (100) of the corrugated layer (1).

12. A corrugated board according to at least one of claims 8 to 11,
**characterized in** that the layer (4) consists of a prefabricated web of material, which is inserted between the layers (1, 2, 3) and bonded thereto, preferably on a carrier web of plastic material, textile or paper, and which comprises the interconnected layer components (80) and the intermediate, free interspaces (90) or the thinner layer components (90) filling said interspaces (90).

13. A corrugated board according to claims 8 to 12,
**characterized in** that, in addition to the interior, carbon-containing layer, a full-area coating (5, 6) consisting of a conducting lacquer is provided on at least one exterior surface (30, 60) of the corrugated board structure.

14. A corrugated board according to claim 13,
**characterized in** that a sublimable corrosion inhibitor (12) is provided on, in, or below the conducting lacquer.

## Revendications

1. Procédé pour fabriquer du carton ondulé (W) en matériau carton ou papier, pour récipient (F) ou pour article en feuille (B), destiné à protéger des objets exposés au risque électrostatique (10), contre des décharges électrostatiques et des champs électriques, dans lequel on prévoit la structure de carton ondulé avec au moins un blindage contenant du carbone (4), que l'on apporte comme une couche, à partir de parties de couche liées ensemble, analogues à une grille ou à un réseau (80), et des espacements plats interposés (90), caractérisé en ce que l'on apporte la couche avant de coller des strates (1, 2, 3) de la structure de carton ondulé, sur une surface intérieure d'au moins une strate, dans la structure de carton ondulé ultérieure (40, 50, 60), et en ce que l'on colle ensemble les strates enfermant entre elles la couche dans la structure de carton ondulé, dans la zone des espacements (90).

2. Procédé selon la revendication 1, caractérisé en ce que l'on recouvre les espacements (90), avant et/ou après avoir apporté les parties de couche liées ensemble (80), par de très minces parties de couche plates (90') du blindage (4), et en ce que l'on colle ensemble, par les très minces parties de couche (90'), les strates enfermant entre elles la couche (1, 2, 3) de la structure de carton ondulé, dans la zone des espacements (90).

3. Procédé selon la revendication 1 ou 2, caractérisé en ce que l'on imprime les parties de couche liées ensemble (80) en plusieurs cycles d'impression et on les serre en imprimant.

4. Procédé selon la revendication 2, caractérisé en ce que l'on apporte les très minces parties de couche (90') sur une strate, en imprimant la totalité de la surface en au moins un cycle d'impression, ou en pulvérisant, respectivement en enduisant la surface intérieure (40, 50, 60), avant et/ou après que l'on apporte les parties de couche (80) liées ensemble.

5. Procédé selon la revendication 1, caractérisé en ce que l'on préfabrique la couche formant le blindage (4) comme une bande continue, présentant les espacements (90) ou comme une grille ou un réseau, et on l'intègre en collant les strates (1, 2, 3).

6. Procédé selon la revendication 1 ou 2, caractérisé en ce que l'on préfabrique la couche formant le blindage (4) comme une bande continue, présentant les parties de couche liées ensemble (80) et les très minces parties de couche (90'), et on l'intègre en collant les strates (1, 2, 3).

7. Procédé selon les revendications 1 à 7, caractérisé en ce que l'on apporte, en plus, un vernis conducteur pour la totalité de la surface (56), sur une surface extérieure (30, 60) au moins une strate (1, 2, 3) de la structure de carton ondulé.

8. Carton ondulé (W) pour récipient (F) ou pour article en feuille (B), destiné à protéger des objets exposés au risque électrostatique (10), contre des décharges électrostatiques et des champs électriques, avec une couche contenant du carbone comme blindage (4) à une surface (40, 50, 60) au moins une strate (1, 2, 3) de la structure de carton ondulé, dans lequel on forme la couche à partir de parties de couche liées ensemble (60), entre lesquelles on forme des espacements plats (90), caractérisé en ce que l'on apporte la couche formant le blindage (4) à une surface intérieure d'au moins une strate, dans la structure de carton ondulé, constituée d'au moins une strate ondulée (1) et d'au moins une strate plane (2, 3), et en ce que l'on colle ensemble les strates (1, 2, 3) de la structure de carton ondulé, enfermant entre elles la couche, dans la zone des espacements (90).

9. Carton ondulé selon la revendication 8, caractérisé en ce que dans la couche, l'on recouvre, les espacements (90), entre les parties de couche liées ensemble (80), par de très minces parties de couche plates, contenant du carbone et/ou du graphite (90'), en face de ces parties de couche (80), et en ce que l'on colle ensemble les strates enfermant la couche (1, 2, 3), dans la zone des très minces parties de couche plates (90').

10. Carton ondulé selon la revendication 9, caractérisé en ce que l'on établit l'épaisseur et/ou la densité des très minces parties de couche (90), de sorte que les très minces parties de couche (90') sont perméables pour un adhésif collant des strates.

11. Carton ondulé selon la revendication 8 ou 9, caractérisé en ce que les espacements (90) forment un motif à peu près régulier avec une orientation de motif s'étendant perpendiculaire ou oblique par rapport à la direction des crêtes d'ondulation (100) de la strate ondulée (1) de la structure de carton ondulé.

12. Carton ondulé selon l'une des revendications 8 à 11, caractérisé en ce que la couche est une bande préfabriquée, laminée entre les strates (1, 2, 3), de préférence à une bande support en matériau synthétique, textile ou papier, et présente les parties de couche liées ensemble (80) et les espacements libres interposés (90) ou les très minces parties de couche (90') remplissant les espacements (90).

13. Carton ondulé selon l'une des revendications 8 à 12, caractérisé en ce que l'on prévoit, en plus, à la couche contenant du carbone posée à l'intérieur, un revêtement pour la totalité de la surface (5, 6) en vernis conducteur, sur au moins une surface extérieure (30, 60) de la structure de carton ondulé.

14. Carton ondulé selon la revendication 13, caractérisé en ce que l'on prévoit un inhibiteur de corrosion pouvant être sublimé (12), sur, dans, ou sous le vernis conducteur.
